# EUROPÄISCHE PATENTSCHRIFT

(11) **EP 0 926 480 B1**
(45) Veröffentlichungstag und Bekanntmachung des Hinweises auf die Patenterteilung: **30.07.2003**
(21) Anmeldenummer: 98119604.1
(22) Anmeldetag: 16.10.1998
(51) Int. Cl.: G01N 1/28

(54) **Vorrichtung zur Handhabung von Proben für die membrangestützte Mikrodissektion**
Device for handling samples for the membrane supported microdissection
Dispositif de manipulation d'échantillons pour la micro-dissection assistée par membrane

(30) Priorität: 18.10.1997 DE 19746178; 25.04.1998 DE 19818425; 20.07.1998 DE 19832496
(43) Veröffentlichungstag der Anmeldung: 30.06.1999
(73) Patentinhaber: Böhm, Malte, Dr., 39104 Magdeburg (DE)
(72) Erfinder: Böhm, Malte, Dr., 39104 Magdeburg (DE)
(74) Vertreter: Gleiss & Grosse

(56) Entgegenhaltungen:
- WO-A-97/13838
- WO-A-98/35215
- DE-A- 3 923 279
- DE-A- 19 603 996
- EMMERT-BUCK M R ET AL: "LASER CAPTURE MICRODISSECTION" SCIENCE,AMERICAN ASSOCIATION FOR THE ADVANCEMENT OF SCIENCE,,US, Bd. 274, Nr. 5289, 8. November 1996 (1996-11-08), Seiten 998-1001, XP000644727 ISSN: 0036-8075
- M. BÖHM ET AL.: "Microbeam-MOMeNT : Non-Contact Laser Microdissection of Membrane-Mounted Native Tissue" AMERICAN JOURNAL OF PATHOLOGY, Bd. 151, Nr. 1, 1. Juli 1997 (1997-07-01), Seiten 63-67, XP002169793
- ISENBERG G ET AL: "CELL SURGERY BY LASER MICRO-DISSECTION: A PREPARATIVE METHOD" JOURNAL OF MICROSCOPY,GB,OXFORD, Bd. 107, Nr. 1, 1. Mai 1976 (1976-05-01), Seiten 19-24, XP000671562 ISSN: 0022-2720

## Beschreibung

Die Erfindung betrifft eine Vorrichtung zur Handhabung von Proben für die membrangestützte Mikrodissektion gemäß Anspruch 1 sowie dafür optimierte Konstruktionsvorschläge.

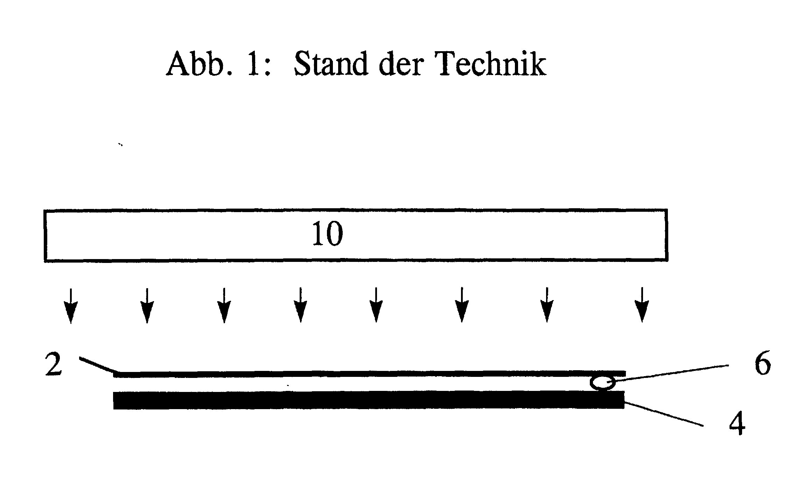

Die membrangestützte Mikrodissektion wurde 1992 erstmals vom Anmelder beschrieben und in weiteren Arbeiten präzisiert (¹⁻³). Die Vorteile des Verfahrens sind in (³) beschrieben. Das Verfahren beruht darauf, daß die zu dissezierenden Objekte nicht direkt auf den Objektträger aufgebracht werden, sondern auf eine Trägermembran (Stand der Technik, Abbildung 1). Diese Trägermembran erleichtert die Mikrodissektion in mehrfacher Weise: Erstens bleiben Beschaffenheit und Gestalt (histologische oder zytologische Integrität) des Dissektates erhalten, was die Qualität der Dissektion leicht überprüf- und dokumentierbar macht. Zweitens erleichtert die Trägermembran den Transfer des Dissektates ohne Beschädigung desselben in ein Reaktionsgefäß für die folgende Analyse. Drittens kann die Trägermembran als Substitut des Deckgläschens dienen und verbessert so die optische Qualität des mikroskopischen Bildes und verhindert die Verunreinigung des zu dissezierenden Objektes von außen. Die Art der Mikrodissektion spielt dabei keine Rolle; sie kann sowohl manuell als auch mittels elektromagnetischer Strahlen, zum Beispiel ultravioletten Laserstrahlen (^{4,5}), geschehen. DE 196 03 996 beschreibt eine Vorrichtung zur membrangestützten Mikrodissektion von Proben und eine Trägermembran, die aus einem ultraviolettabsorbierenden Polymer besteht und auf einem Schiebetisch mechanisch fixiert ist. Die Trägermembran kann mittels ultravioletter Strahlung desinfiziert werden (³, Abbildung 1, 10).

Bezüglich der optimalen Dicke der Membran besteht ein Zielkonflikt: Einerseits läßt sich die Membran umso besser schneiden und beeinträchtigt die optische Qualität umso weniger, je dünner sie ist, vorzugsweise dünner als 5 Mikrometer. Auf der anderen Seite lassen sich sehr dünne Membranen schlecht handhaben, da sie schlecht sichtbar sind, Falten werfen, einreißen und Ähnliches mehr.

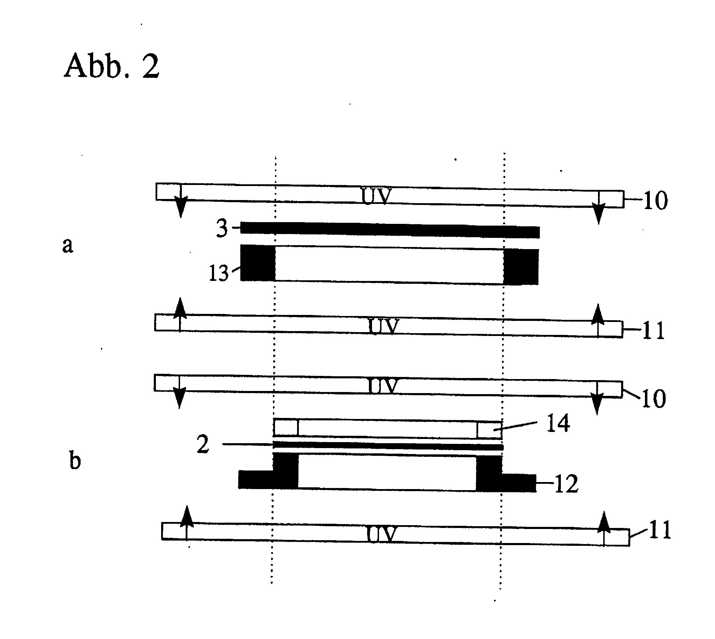

Die Erfindung betrifft eine Vorrichtung zur Handhabung von Proben für die membrangestützte Mikrodissektion, wobei die Trägermembran mit einem mit bloßem Auge gut erkennbaren und mit Händen greifbaren Körper fest verbunden ist, sowie dafür optimierte Konstruktionsvorschläge. Die Trägermembran kann zum einen von einem Rahmen gehalten werden (Abb. 2, 3 und 5). Dadurch bleibt die Trägermembran immer plan und gestreckt, und sie kann einfach erkannt, transportiert und positioniert werden.

Eine weitere vorteilhafte Ausgestaltung der Erfindung besteht darin, daß sich die Maße der Vorrichtung an den Maßen von Standardobjektträgern (zum Beispiel 26 x 76 mm) orientieren, wodurch sie in handelsüblichen Präparatekästen aufbewahrt und transportiert werden können.

Eine weitere vorteilhafte Ausgestaltung der Erfindung besteht darin, daß die Membranen in ihrer Dicke und Brechungsindex unter Berücksichtigung des Eindeckmittels auf das Objektiv abgestimmt werden. Dadurch können ohne wesentlichen Verlust an optischer Qualität solche Objektive verwendet werden, die für die Verwendung handelsüblicher Deckgläschen und Eindeckmedien vorgesehen sind.

Eine weitere vorteilhafte Ausgestaltung der Erfindung besteht darin, daß die Eigenschaften der Membran durch Nachbearbeiten mit Wärme, Licht etc. gezielt modifiziert werden.

Eine weitere vorteilhafte Ausgestaltung der Erfindung besteht darin, daß die Membran zunächst in einen plastischen Zustand gebracht wird und dann durch Nachbearbeiten mit Wärme, Licht (z.B ultraviolettes Licht) etc. gezielt ausgehärtet oder durch chemisch induzierte Vernetzun ausgehärtet wird.

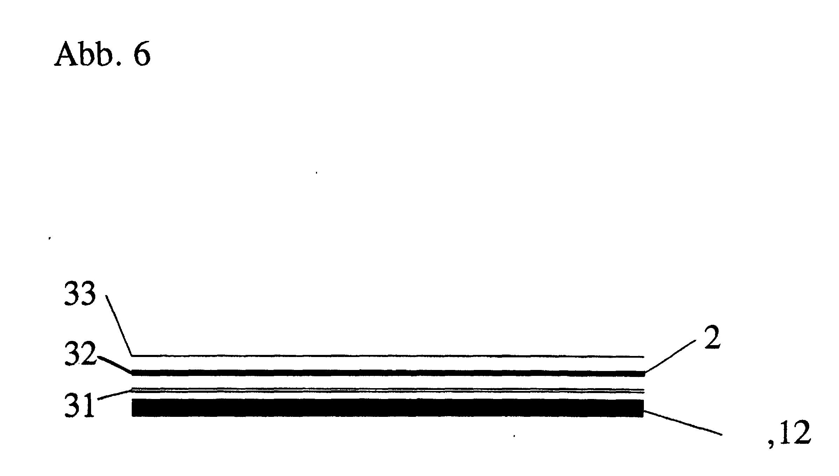

Eine weitere vorteilhafte Ausgestaltung der Erfindung besteht darin, daß die Eigenschaften der Membran durch das Aufbringen mehrerer definierter Schichten gezielt beeinflußt werden (Sandwich-Technik, Abb. 6). Dabei können die verschiedenen Aufbringeverfahren (Sprühlackierung, Streich-/Rolllackierung, Aufdampfen, galvanische Aufbringung, Tauchlackierung, Schleuderlackierung) miteinander kombiniert werden.

Eine weitere vorteilhafte Ausgestaltung der Erfindung besteht darin, daß die Membranen mit einem Dickegradienten auf den Halterahmen aufgebracht werden.

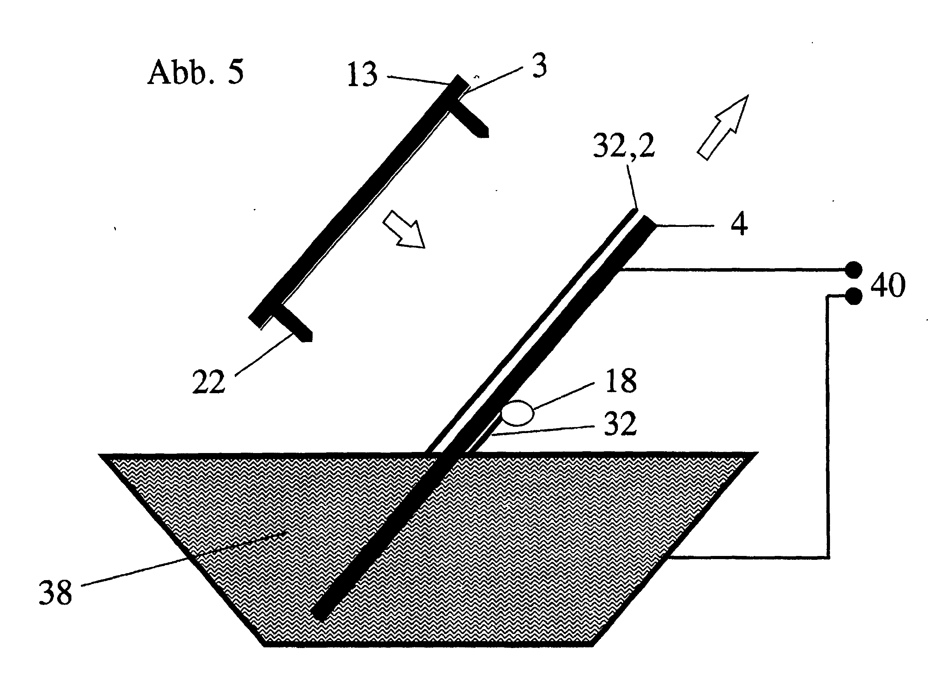

Eine weitere vorteilhafte Ausgestaltung der Erfindung besteht darin, daß das zunächst an einer Seite frei liegende zu dissezierende Objekt in einem weiteren Schritt mit mit einer zweiten Membran-/Halterkonstruktion eingedeckt wird (Abb. 2a, 2b und 5).

Eine weitere vorteilhafte Ausgestaltung der Erfindung besteht darin, daß Halter und Unterlage, beziehungsweise die Rahmen für Trägermembran und die Rahmen für die Deckmembran so geformt oder mit Ausstülpungen versehen sind, daß sie ineinander einrasten, beziehungsweise verschiebefest miteinander verbunden werden (Abb. 2, 3 und 5).

Eine weitere vorteilhafte Ausgestaltung der Erfindung besteht darin, daß die beiden oben erwähnten Rahmen, beziehungweise Membranen durch einen Abstandhalter in einem definierten Abstand voneinander gehalten werden. Dieser Abstandhalter kann als weiterer Rahmen (Abb. 2) sein. Der definierte Abstand zwischen den Membranen kann auch durch eine geeignete Konstruktion der Rahmen erreicht werden.

Eine weitere vorteilhafte Ausgestaltung der Erfindung besteht darin, daß die Trägermembran permanent am Halterahmen fixiert ist.

Eine weitere vorteilhafte Ausgestaltung der Erfindung besteht darin, daß der Rahmen derart gestaltet ist, daß die Trägermembran mit dem Rahmen nicht verschweißt oder verklebt wird, sondern in den Rahmen auswechselbar eingespannt wird.

Eine weitere vorteilhafte Ausgestaltung der Erfindung besteht darin, daß mehrere Membranen gleicher oder unterschiedlicher Eigenschaften auf den Halterahmen aufgebracht werden.

Eine weitere vorteilhafte Ausgestaltung der Erfindung besteht darin, daß zwischen dem Halterahmen und der Trägermembran eine Trennschicht oder eine Bindeschicht angeordnet ist.

Eine weitere vorteilhafte Ausgestaltung der Erfindung besteht darin, daß die Membran-/Halterkonstruktion zur Dekontamination mit elektromagnetischer Strahlung anderer Wellenlänge als ultraviolettes Licht, zum Beispiel Gammastrahlung oder mit Partikeln, zum Beispiel Elektronen bestrahlt wird.

Eine weitere vorteilhafte Ausgestaltung der Erfindung besteht darin, daß die Halter so gestaltet sind, daß die Membran nicht plan ausgespannt ist, sondern definierte Formen im Raum einnimmt. Damit können auch nicht-planare Objekte an ihrer Oberfläche von Membran bedeckt werden.

Eine weitere vorteilhafte Ausgestaltung der Erfindung besteht darin, daß die aufgebrachten Membranen beprägt oder bedruckt werden. Damit können zum Beispiel Markierungen oder Sollrißstellen definiert werden.

Eine weitere vorteilhafte Ausgestaltung der Erfindung betrifft die Zerstörung kontaminierender Nukleinsäuren und Eiweiße an den Trägern für die membrangestützte Mikrodissektion in einem Schritt mittels nicht-ultravioletter Strahlen oder mittels Partikeln.

### Literatur

1. Wieland I, Böhm M, Bogatz S (1992): Isolation of DNA sequences deleted in lung cancer by genomic difference cloning. Proceedings of the National Academy of Sciences of the USA **89**:9705-9709.
2. Böhm M, Wieland I, Totzeck B (1993): Detection of tumor-specific homozygous deletions in human biopsies by polymerase chain reaction. Cancer Genetics and Cytogenetics **65**:83-87.
3. Böhm M, Wieland I (1997) Analysis of tumour-specific alterations in native specimens by PCR: How to procure the tumour cells!, International Journal of Oncology 10:131-139.
4. Böhm M, Wieland I, Schütze K, Rübben H (1997) Microbeam-MOMeNT: Non-contact microdissection of membrane-mounted native tissue, Am J Pathol 151:63-67.
5. Deutsches Patentamt, Offenlegungsschrift DE 196 03 996 A 1

### Stand der Technik

In Abbildung 1 wird eine Trägermembran 2 für die Mikrodissektion (24 x 60) mm auf einen Standardobjektträger aus Glas 4 (26 x 76 mm) aufgebracht und mit einem Tropfen Gefrierkleber 6 oder einem anderen wasserlöslichen Kleister an einer Ecke 8 des Objektträgers 4 fixiert. Dargestellt ist ferner eine oberhalb des Objektträgers 4 angeordnete Strahlungsquelle für ultraviolettes Licht 10 mit 254 nm Wellenlänge, mit der die Membran bestrahlt wird.

### Ausführungsbeispiele

Durch Kombination der einzelnen Anprüche sind viele unterschiedliche konstruktive Lösungen möglich, von denen die folgenden Beispiele nur einige und keinesfalls alle denkbaren Lösungen zeigen.

In Abbildung 2b wird eine Trägermembranmembran 2 für die Mikrodissektion (26 x 76 mm) auf einen Rahmen 12 (26 x 76 mm, Rahmenprofil 2 x 2 mm) aufgebracht und darauf fixiert. Die Trägermembran 2 besteht aus Polyester, Polyethylen oder Polykarbonat von weniger als 5 µm Dicke. Auf der Trägermembranmembran 2, beziehungweise dem Rahmen 12 ist ein Abstandhalter 14 (20 x 70 mm, Rahmenprofil 2 mm x 10 µm) zur Abstandhaltung zwischen Trägermembran und Deckmembran angebracht. Dargestellt sind ferner oberhalb 10 und unterhalb 11 der Membran-/Rahmenkonstruktionen angeordnete Strahlungsquellen für ultraviolettes Licht mit 254 nm Wellenlänge.

In Abbildung 2a wird eine Deckmembran 3 (20 x 70 mm) auf einen Rahmen 13 (20 x 70 mm, Rahmenprofil 2 x 2 mm) aufgebracht und darauf fixiert. Die Deckmembran 3 besteht aus Polyester, Polyethylen oder Polykarbonat von mehr als 10 µm bevorzugt von mehr als 30 µm Dicke. Die Membran- und Rahmengröße ist so gewählt, daß die Deckmembran 3 auf Rahmen 13 in die Aussparung des Rahmens 12 der Trägermembran 2 aus Abbildung 2b paßt. Die Abbildungen 2a und 2b sind als Explosionszeichnung zu verstehen, wobei die ultravioletten Strahlungsquellen 10 und 11 vor dem Zusammenstecken entfernt werden müssen.

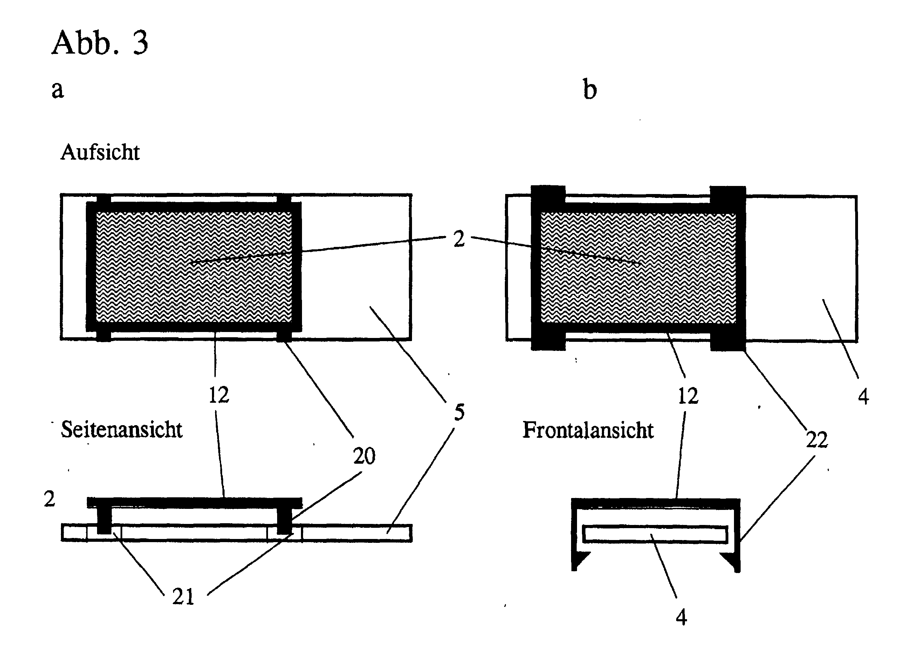

In Abbildung 3a ist der Rahmen 12 der Trägermembran mit Rastverbindern 20 versehen, die in entsprechende Aussparungen 21 des Objektträgers 5 passen. Alternativ ist der Rahmen 12 der Trägermembran in Abbildung 3b mit Rastverbindern 22 versehen, die den Objektträger 4 umgreifen, so daß im Objektträger 4 entsprechende Aussparungen nicht erforderlich sind.

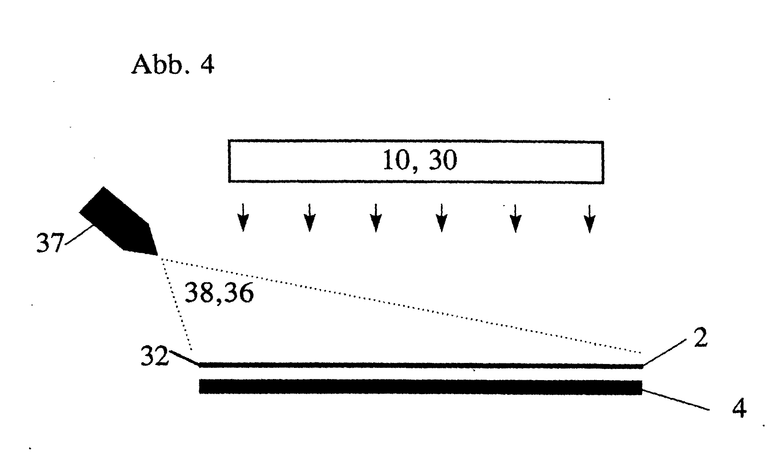

Abb 4 und 5 sind nicht Teil der Erfindung.

In Abbildung 4 wird ein Objektträger 4 aus einer Sprühvorrichtung 37 mit einer Membranlösung 38 besprüht (Sprühlackierung) oder bedampft, welche sich als Film 32 auf dem Objektträger 4 niederschlägt. Dieser wird dann durch Bestrahlung mit ultraviolettem Licht 10 und durch Wärme 30 zur Membran ausgehärtet. Die Aushärtung wird zusätzlich durch Aufsprühen oder Aufdampfen eines chemischen Vernetzers 36 beschleunigt.

In Abbildung 5 wird der Objektträger 4 in die Membranlösung 38 getaucht (Tauchlackierung). Dabei kann der entstehende Film 32 vor dem Aushärten zur Membran 2 auf einer Seite des Objektträgers mit einem Wischer 18 abgewischt werden. Zudem kann die Aufbringung des Films durch Anlegen einer Spannung 40 zwischen Objektträger und Membranlösung verbessert werden (galvanische Aufbringung). Anschließend wird ein Rahmen 13, der eine Membran 3 hält und mit Rastverbindern 22 versehen ist, auf den beschichteten Objektträger gesteckt.

In Abbildung 6 wird auf den Membranhalter (Rahmen 12) zunächst eine Schicht 31 aufgebracht, die zum Beispiel ultraviolettes Licht stark absorbiert. Anschließend wird der Membranfilm 32 aufgebracht und zur Membran 2 ausgehärtet. Danach wird eine weitere Schicht 33 aufgebracht, die zum Beispiel stark haftend ist (Sandwichverfahren).

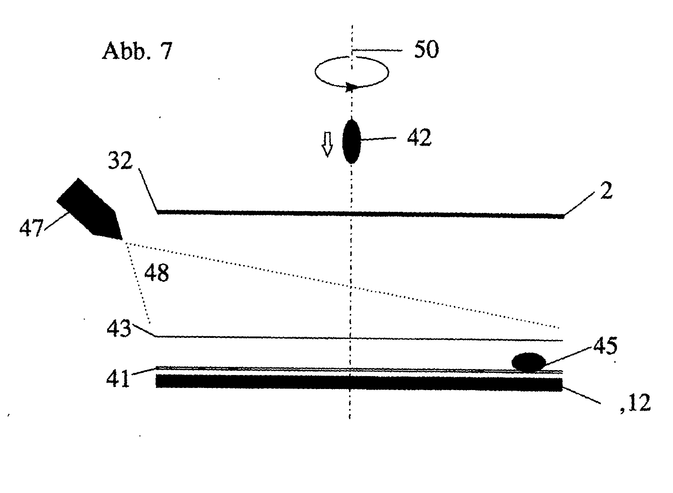

In Abbildung 7 wird auf den Membranhalter (Rahmen 12) zunächst eine Schicht 41 mit einem Pinsel oder Roller 45 aufgestrichen oder aufgerollt. Anschließend wird eine weitere Schicht 43 mittels einer Verdampfervorrichtung 47 in Form von Dampf 48 aufgebracht. Danach wird die Membranlösung 42 auf den Membranhalter aufgetropft. Durch Rotation des Membranhalters um seine Achse 50 wird die Membranlösung 42 zum Membranfilm 32 verteilt, der dann zur Membran 2 ausgehärtet wird (Sandwichverfahren).

## Patentansprüche

1. Vorrichtung zur membrangestützten Mikrodissektion von Proben, umfassend einen Objektträger (4,5) und eine Trägermembran (2), wobei die Trägermembran (2) auf einem Halterahmen (12) angeordnet ist, dünner als 5 um ist und aus einem ultraviolettes Licht absorbierenden Polymer besteht.

2. Vorrichtung nach Anspruch 1, wobei die Trägermembran (2) permanent am Halterahmen (12) fixiert ist.

3. Vorrichtung nach Anspruch 1, wobei die Trägermembran (2) auswechselbar in den Halterahmen (12) eingespannt ist.

4. Vorrichtung nach einem der Ansprüche 1 bis 3, wobei die Trägermembran (2) undurchlässig für ultraviolettes Licht ist.

5. Vorrichtung nach einem der Ansprüche 1 bis 4, wobei die Trägermembran (2) beprägt ist.

6. Vorrichtung nach einem der Ansprüche 1 bis 4, wobei die Trägermembran (2) bedruckt ist.

7. Vorrichtung nach einem der Ansprüche 1 bis 6, wobei auf der Trägermembran (2) eine ultraviolettes Licht absorbierende Schicht angeordnet ist.

8. Vorrichtung nach einem der Ansprüche 1 bis 7, wobei zwischen dem Halterahmen (12) und der Trägermembran (2) eine Trennschicht angeordnet ist.

9. Vorrichtung nach einem der Ansprüche 1 bis 7, wobei zwischen dem Halterahmen (12) und der Trägermembran (2) eine Bindeschicht angeordnet ist.

10. Vorrichtung nach einem der Ansprüche 1 bis 9, wobei auf der Trägermembran (2) eine zu dissezierende Probe angeordnet ist.

11. Vorrichtung nach Anspruch 10, wobei die zu dissezierende Probe mit einer oder mehreren Membranen eingedeckt ist.

12. Vorrichtung nach einem der Ansprüche 1 bis 11, wobei über dem Halterahmen (12) und der darauf befindlichen Trägermembran (2) ein zweiter Halterahmen (13) mit einer Deckmembran (3) angeordnet ist.

13. Vorrichtung nach Anspruch 12, wobei die Trägermembran (2) und die Deckmembran (3) einen definierten Abstand zueinander aufweisen.

14. Vorrichtung nach Anspruch 13, wobei auf der Trägermembran (2) ein Abstandhalter (14) angebracht ist.

15. Vorrichtung nach Anspruch 13, wobei auf dem Halterahmen (12) ein Abstandhalter (14) angebracht ist.

16. Vorrichtung nach einem der Ansprüche 12 bis 15, wobei die Deckmembran (3) dicker als 10 µm ist.

17. Vorrichtung nach einem der Ansprüche 1 bis 16, wobei die Membranen (2,3) und die Halterahmen (12,13) Abmessungen aufweisen, die ihre Aufbewahrung oder ihren Transport in Standardgefäßen erlauben.

18. Vorrichtung nach einem der Ansprüche 1 bis 17, wobei der Halterahmen (12) Rastverbinder (20) aufweist, die das Einrasten in Aussparungen (21) des Objektträgers (5) erlauben.

19. Vorrichtung nach einem der Ansprüche 1 bis 17, wobei der Halterahmen (12) Rastverbinder (22) aufweist, die den Objektträger (4) umgreifen.

20. Verfahren zum Aufbringen einer Membran (2,3) auf einen Halterahmen (12,13) einer Vorrichtung zur membrangestützten Mikrodissektion, wobei eine nicht-polymerisierte Membranlösung (38) auf den Halterahmen (12,13) aufgebracht und durch Polymerisation verfestigt wird.

21. Verfahren nach Anspruch 20, wobei die nicht-polymerisierte Membranlösung (38) auf den Halterahmen (12,13) aufgerollt oder gestrichen wird.

22. Verfahren nach Anspruch 20, wobei die nicht-polymerisierte Membranlösung (38) auf den Halterahmen (12,13) aufgesprüht wird.

23. Verfahren nach Anspruch 20, wobei die nicht-polymerisierte Membranlösung (38) auf den Halterahmen (12,13) aufgedampft wird.

24. Verfahren nach Anspruch 20, wobei die nicht-polymerisierte Membranlösung (38) auf den Halterahmen (12,13) galvanisch aufgebracht wird.

25. Verfahren nach Anspruch 20, wobei der Halterahmen (12,13) in die nicht-polymerisierte Membranlösung (38) eingetaucht wird.

26. Verfahren nach Anspruch 20, wobei die nicht-polymerisierte Membranlösung (42) mittels Schleuderlackierung auf den rotierenden Halterahmen (12,13) aufgetropft wird.

27. Verfahren nach einem der Ansprüche 20 bis 26, wobei die Membran (2,3) durch Bestrahlung mit Licht gehärtet und/oder modifiziert wird.

28. Verfahren nach Anspruch 27, wobei mit ultraviolettem Licht modifiziert und/oder gehärtet wird.

29. Verfahren nach einem der Ansprüche 20 bis 26, wobei die Membran (2,3) durch Wärmebehandlung gehärtet und/oder modifiziert wird.

30. Verfahren nach einem der Ansprüche 20 bis 26, wobei die Membran (2,3) durch chemisch induzierte Vernetzung gehärtet und/oder modifiziert wird.

31. Verfahren nach einem der Ansprüche 20 bis 30, wobei mehrere Membranen (31,32,33;41,43,42) unterschiedlicher Eigenschaften auf den Halterahmen (12,13) aufgebracht werden.

32. Verfahren nach einem der Ansprüche 20 bis 30, wobei mehrere Membranen (31,32,33;41,43,42) gleicher Eigenschaften auf den Halterahmen (12,13) aufgebracht werden.

33. Verfahren nach einem der Ansprüche 20 bis 32, wobei die Membranen (2,3;31,32,33;41,43,42) mit einem Dickegradienten auf den Halterahmen (12,13) aufgebracht werden.

34. Verfahren nach einem der Ansprüche 20 bis 33, wobei die Membranen (2,3;31,32,33;41,43,42) undurchlässig für ultraviolettes Licht sind.

35. Verfahren nach einem der Ansprüche 20 bis 34, wobei die Membranen (2,3;31,32,33;41,43,42) und der Halterahmen (12,13) zur Zerstörung kontaminierender Nukleinsäuren und Eiweiße mit nicht-ultravioletten elektromagnetischen Strahlen bestrahlt werden.

36. Verfahren nach einem der Ansprüche 20 bis 34, wobei die Membranen (2,3;31,32,33;41,43,42) und der Halterahmen (12,13) zur Zerstörung kontaminierender Nukleinsäuren und Eiweiße mit Partikeln bestrahlt werden.

## Claims

1. An apparatus for the membrane-supported micro-dissection of samples comprising an object support (4, 5) and a supporting membrane (2), whereby the supporting membrane (2) is arranged upon a holding frame (12), and whereby the same is thinner than 5 µm, and whereby the same consists of a polymer that absorbs ultraviolet light.

2. An apparatus according to claim 1, whereby the supporting membrane (2) is permanently affixed upon the holding frame (12).

3. An apparatus according to claim 1, whereby the supporting membrane (2) is interchangeably restrained upon the holding frame (12).

4. An apparatus according to one of the preceding claims 1 to 3, whereby the supporting membrane (2) is non-transparent with regard to ultraviolet light.

5. An apparatus according to one of the preceding claims 1 to 4, whereby the supporting membrane (2) is embossed.

6. An apparatus according to one of the preceding claims 1 to 4, whereby the supporting membrane (2) is printed.

7. An apparatus according to one of the preceding claims 1 to 6, whereby an ultraviolet light absorbing layer is arranged upon the supporting membrane (2).

8. An apparatus according to one of the preceding claims 1 to 7, whereby a separating layer is arranged between the holding frame (12) and the supporting membrane (2).

9. An apparatus according to one of the preceding claims 1 to 7, whereby a binding layer is arranged between the holding frame (12) and the supporting membrane (2).

10. An apparatus according to one of the preceding claims 1 to 9, whereby a sample that is to be dissected is placed upon the supporting membrane (2).

11. An apparatus according to claim 10, whereby the sample that is to be dissected is enclosed within one or several membranes.

12. An apparatus according to one of the preceding claims 1 to 11, whereby a second holding frame (13) with a covering membrane (3) is arranged above the holding frame (12) and the supporting membrane (2) is positioned upon the same.

13. An apparatus according to claim 12, whereby the supporting membrane (2) and the covering membrane (3) are separated from one another by a defined distance.

14. An apparatus according to claim 13, whereby a distancer (14) is arranged upon the supporting membrane (2).

15. An apparatus according to claim 13, whereby a distancer (14) is arranged upon the holding frame (12).

16. An apparatus according to one of the preceding claims 12 to 15, whereby the covering membrane (3) is thicker than 10 µm.

17. An apparatus according to one of the preceding claims 1 to 16, whereby the membranes (2, 3) and the holding frames (12, 13) incorporate dimensions that enable the storage or the transport of the same in standard vessels.

18. An apparatus according to one of the preceding claims 1 to 17, whereby the holding frame (12) incorporates engaging connections (20) which enable the engaging of the same into recesses (21) contained within the object carrier (5).

19. An apparatus according to one of the preceding claims 1 to 17, whereby the holding frame (12) incorporates engaging connections (22) which grippingly engage the object carrier (4).

20. A method for the affixing of a membrane (2, 3) onto a holding frame (12, 13) of an apparatus for the membrane-supported micro-dissection, whereby a non-polymerised membrane solution (38) is applied to a holding frame (12, 13) and affixed by polymerisation.

21. A method according to claim 20, whereby the non-polymerised membrane solution (38) is rolled or painted onto the holding frame (12, 13).

22. A method according to claim 20, whereby the non-polymerised membrane solution (38) is sprayed onto the holding frame (12, 13).

23. A method according to claim 20, whereby the non-polymerised membrane solution (38) is steamed onto the holding frame (12, 13).

24. A method according to claim 20, whereby the non-polymerised membrane solution (38) is galvanically applied onto the holding frame (12, 13).

25. A method according to claim 20, whereby the holding frame (12, 13) is submersed into the non-polymerised membrane solution (38).

26. A method according to claim 20, whereby the non-polymerised membrane solution (42) is applied in droplets onto the rotating holding frame (12, 13) by a centrifugal lacquering process.

27. A method according to one of the preceding claims 20 to 26, whereby the membrane (2, 3) is hardened and/or modified through being irradiated with light.

28. A method according to claim 27, whereby ultraviolet light is utilised for the modification and/or hardening process.

29. A method according to one of the preceding claims 20 to 26, whereby the membrane (2, 3) is hardened and/or modified by heat treatment.

30. Method according to one of the preceding claims 20 to 26, whereby the membrane (2, 3) is hardened and/or modified by a chemically induced cross-linking.

31. A method according to one of the preceding claims 20 to 30, whereby several membranes (31, 32, 33; 41, 43, 42) with different characteristics are applied onto the holding frame (12, 13).

32. A method according to one of the preceding claims 20 to 30, whereby several membranes (31, 32, 33; 41, 43, 42) with the same characteristics are applied onto the holding frame (12, 13).

33. A method according to one of the preceding claims 20 to 32, whereby the membranes (2, 3; 31, 32, 33; 41, 43, 42) are affixed onto the holding frame (12, 13) by a thickness gradient.

34. A method according to one of the preceding claims 20 to 33, whereby the membranes (2, 3; 31, 32, 33; 41, 43, 42) are transparent with regard to ultraviolet light.

## Revendications

1. Dispositif pour la microdissection de prélèvements à l'aide de membranes, comprenant un support d'objet (4, 5) et une membrane de support (2), la membrane de support (2) étant disposée sur un cadre de maintien (12), étant plus mince que 5 µm et se composant d'un polymère absorbant la lumière ultraviolette.

2. Dispositif selon la revendication 1, la membrane de support (2) étant fixée de manière permanente au cadre de maintien (12).

3. Dispositif selon la revendication 1, la membrane de support (2) étant montée de manière interchangeable sur le cadre de maintien (12).

4. Dispositif selon l'une des revendications 1 à 3, la membrane de support (2) étant opaque à la lumière ultraviolette.

5. Dispositif selon l'une des revendications 1 à 4, la membrane de support (2) étant estampée.

6. Dispositif selon l'une des revendications 1 à 4, la membrane de support (2) étant imprimée.

7. Dispositif selon l'une des revendications 1 à 6, une couche absorbant la lumière ultraviolette étant disposée sur la membrane de support (2).

8. Dispositif selon l'une des revendications 1 à 7, une couche de séparation étant disposée entre le cadre de maintien (12) et la membrane de support (2).

9. Dispositif selon l'une des revendications 1 à 7, une couche de liaison étant disposée entre le cadre de maintien (12) et la membrane de support (2).

10. Dispositif selon l'une des revendications 1 à 9, un prélèvement à disséquer étant disposé sur la membrane de support (2).

11. Dispositif selon la revendication 10, le prélèvement à disséquer étant recouvert par une ou plusieurs membranes.

12. Dispositif selon l'une des revendication 1 à 11, un deuxième cadre de maintien (13) comprenant une membrane de couverture (3) étant disposé sur le cadre de maintien (12) et sur la membrane de support (2) située sur celui-ci.

13. Dispositif selon la revendication 12, la membrane de support (2) et la membrane de couverture (3) présentant une distance définie l'une par rapport à l'autre.

14. Dispositif selon la revendication 13, un écarteur (14) étant disposé sur la membrane de support (2).

15. Dispositif selon la revendication 13, un écarteur (14) étant disposé sur le cadre de maintien (12).

16. Dispositif selon l'une des revendications 12 à 15, la membrane de couverture (3) étant plus épaisse que 10 µm.

17. Dispositif selon l'une des revendications 1 à 16, les membranes (2, 3) et les cadres de maintien (12, 13) présentant des dimensions permettant leur conservation ou leur transport dans des récipients de type standard.

18. Dispositif selon l'une des revendications 1 à 17, le cadre de maintien (12) présentant des raccords à crans (20) permettant l'encliquetage dans des évidements (21) du support d'objet (5).

19. Dispositif selon l'une des revendications 1 à 17, le cadre de maintien (12) présentant des raccords à crans (22) saisissant le contour du support d'objet (4).

20. Procédé d'application d'une membrane (2, 3) sur un cadre de maintien (12, 13) d'un dispositif pour la microdissection à l'aide de membranes, dans lequel une solution de membrane (38) non polymérisée est appliquée sur le cadre de maintien (12, 13) et fixée par polymérisation.

21. Procédé selon la revendication 20, la solution de membrane (38) non polymérisée étant déroulée ou enduite sur le cadre de maintien (12, 13).

22. Procédé selon la revendication 20, la solution de membrane (38) non polymérisée étant vaporisée sur le cadre de maintien (12, 13).

23. Procédé selon la revendication 20, la solution de membrane (38) non polymérisée étant déposée sous forme de vapeur sur le cadre de maintien (12, 13).

24. Procédé selon la revendication 20, la solution de membrane (38) non polymérisée étant appliquée de manière galvanique sur le cadre de maintien (12, 13).

25. Procédé selon la revendication 20, le cadre de maintien (12, 13) étant plongé dans la solution de membrane (38) non polymérisée.

26. Procédé selon la revendication 20, dans lequel la solution de membrane (42) non polymérisée est appliquée en gouttes sur le cadre de maintien (12, 13) en rotation à l'aide d'un procédé de peinture par centrifugation.

27. Procédé selon l'une des revendications 20 à 26, la membrane (2, 3) étant solidifiée et/ou modifiée par irradiation lumineuse.

28. Procédé selon la revendication 27, la modification et/ou la solidification étant réalisée avec de la lumière ultraviolette.

29. Procédé selon l'une des revendications 20 à 26, la membrane (2, 3) étant solidifiée et/ou modifiée par traitement thermique.

30. Procédé selon l'une des revendications 20 à 26, la membrane (2, 3) étant solidifiée et/ou modifiée par réticulation induite chimiquement.

31. Procédé selon l'une des revendications 20 à 30, plusieurs membranes (31, 32, 33 ; 41, 43, 42) présentant des propriétés différentes étant appliquées sur le cadre de maintien (12, 13).

32. Procédé selon l'une des revendications 20 à 30, plusieurs membranes (31, 32, 33 ; 41, 43, 42) présentant les mêmes propriétés étant appliquées sur le cadre de maintien (12, 13).

33. Procédé selon l'une des revendications 20 à 32, les membranes (2, 3; 31, 32, 33 ; 41, 43, 42) étant appliquées sur le cadre de maintien (12, 13) avec un gradient d'épaisseur.

34. Procédé selon l'une des revendications 20 à 33, les membranes (2, 3; 31, 32, 33 ; 41, 43, 42) étant opaques à la lumière ultraviolette.
